# EUROPÄISCHE PATENTANMELDUNG

(11) **EP 2 178 053 A2**
(43) Veröffentlichungstag der Anmeldung: **21.04.2010**
(21) Anmeldenummer: 09008181.1
(22) Anmeldetag: 23.06.2009
(51) Int. Cl.: G07C 5/08

(54) **Anordnung für ein web-basiertes elektronisches Fahrtenbuch**

(30) Priorität: 18.10.2008 DE 202008013951 U
(71) Anmelder: CSB-System AG, 52511 Geilenkirchen (DE)
(72) Erfinder: Wendlandt, Reinhard, 18581 Putbus (DE)
(74) Vertreter: Weihrauch, Frank

(57) **Zusammenfassung**

Es wird eine Anordnung zur automatischen Führung eines elektronischen Fahrtenbuchs mittels Positionsdaten, die vom Fahrzeug über eine drahtlose Netzwerkverbindung an einen Server übertragen werden, beschrieben, die nicht nur in einem Fahrzeug genutzt werden kann, nicht eingebaut werden muss, zumindest die Identifikation des Fahrers ermöglicht, eine kompakte Bauform aufweist und Anwenderfreundlich ist.

Erfindungsgemäß besteht die Anordnung im Wesentlichen aus einem Mobiltelefon (1) mit integriertem GPS-Modul und einer auf dem Mobiltelefon (1) installierten Anwendungssoftware (2) mit den in einem Fahrzeug erforderlichen Funktionen für die Führung des elektronischen Fahrtenbuchs.

## Beschreibung

Die Erfindung betrifft eine Anordnung zur automatischen Führung eines elektronischen Fahrtenbuchs mittels Positionsdaten, die vom Fahrzeug über eine drahtlose Netzwerkverbindung an einen Server übertragen werden.

Vorrichtungen zur drahtlosen Datenübertragung von einem Kraftfahrzeug an eine oder mehrere stationäre Empfangseinrichtungen, die zur Erfassung und Übertragung von Fahrtdaten dienen und die automatischen Führung eines elektronischen Fahrtenbuchs auf einem Server via Internet geeignet sind, werden beispielsweise in den Druckschriften DE 199 34 327 A1 und DE 100 08 352 A1 beschrieben.

Diese aufwendigen, in einem Kraftfahrzeug zu montierenden Vorrichtungen weisen als wesentliche einzelne Komponenten ein GSM (Global System for Mobile Communication) - oder UMTS (Universal Mobile Telecommunication System) - Modul als Datenübertragungseinrichtung, alternativ zum Kilometerzähler ein GPS (Global Positioning System) - Modul zur Messung der zurückgelegten Wegstrecke sowie optional eine Vorrichtung zur Identifikation des Fahrers auf.

Eine Anordnung, mit der ein Abgleich und die Korrektur des in einem automatisch geführten elektronischen Fahrtenbuchs auf einem Server mit Hilfe eines GPS-Mobilfunk-Telematiksystems hinterlegten Kilometerstands eines Kraftfahrzeug mit der Anzeige des Kilometerzählers im Kraftfahrzeug erfolgt, wird in der Druckschrift DE 20 2007 007 694 U1 benannt.
Mit dem GPS-Mobilfunk-Telematiksystem ist ein Anzeige- und Eingabegerät mit einer Kartenleseeinheit, einem Anzeigefeld und Eingabetasten verbunden.

Die Identifizierung und Authentifizierung des Fahrzeugbenutzers erfolgt an Hand der auf einer Chip- oder Magnetkarte gespeicherten Daten, wobei über unterschiedliche Einschubrichtungen der Karte der private oder dienstliche Fahrtzweck im elektronischen Fahrtenbuch hinterlegt wird.

Am Fahrtende erfolgt ein Vergleich des im Anzeigefeld wiedergegebenen Kilometerstands mit dem des Kilometerzählers des Fahrzeugs, woraufhin dieser bestätigt oder gegebenenfalls korrigiert wird, so dass die Kilometerstände im elektronischen Fahrtenbuch und auf dem Kilometerzähler übereinstimmen.

Diesen bekannten Vorrichtungen und der Anordnung ist gemeinsam, dass mehrere in einem Fahrzeug zu installierende und miteinander zu verbindende Komponenten zur automatischen Führung eines elektronischen Fahrtenbuchs erforderlich sind.

Die Aufgabe der Erfindung besteht darin, eine Anordnung zur automatischen Führung eines elektronischen Fahrtenbuchs mittels Positionsdaten, die vom Fahrzeug über eine drahtlose Netzwerkverbindung an einen Server übertragen werden, zu entwickeln, die nicht nur in einem Fahrzeug genutzt werden kann, nicht eingebaut werden muss, zumindest die Identifikation des Fahrers ermöglicht, eine kompakte Bauform aufweist und Anwenderfreundlich ist.

Die Aufgabe wird durch die im Patentanspruch 1 aufgeführten Merkmale gelöst. Bevorzugte Weiterbildungen ergeben sich aus den Unteransprüchen.

Eine erfindungsgemäße Anordnung zur automatischen Führung eines elektronischen Fahrtenbuchs mittels Positionsdaten, die vom Fahrzeug über eine drahtlose Netzwerkverbindung an einen Server übertragen werden, besteht im Wesentlichen aus einem Mobilfunkendgerät, wie einem Mobiltelefon mit integriertem GPS-Modul, mit einer auf diesem installierten Anwendungssoftware mit den im Fahrzeug erforderlichen Funktionen für die Führung des elektronischen Fahrtenbuchs auf dem Server.

Insbesondere umfassen diese Funktionen neben der Identifikation des benutzten Fahrzeugs, die Identifikation des Fahrzeugbenutzers, Initiierung der Aufzeichnung von Beginn und Ende einer Fahrt, Kennzeichnung des Fahrtzwecks (privat oder dienstlich) und Angaben zur zurückgelegten Wegstrecke (Start- und Zielort, Zwischenstationen sowie Kilometeranzahl).

Bekannte Mobiltelefone, die beispielsweise für BlackBerry-Lösungen und -Anwendungen geeignet sind, weisen einen Funktionsumfang auf, der neben Telefoniemerkmalen und der Verwendung als Navigationsgerät die Möglichkeit zur Installation von spezifischen Anwendungsprogrammen, wie zum Empfang und Senden von E-mails sowie mobilen Anwendungen beispielsweise mittels GPRS (General Packet Radio Service) aufweisen, sind für die erfindungsgemäße Anordnung geeignet.

Das Mobiltelefon ist üblicherweise einem Benutzer zugeordnet. Im elektronischen Fahrtenbuch auf dem Server ist die IMEI (International Mobile Equipment Identity) des Mobiltelefons und/oder optional dessen Rufnummer dem Benutzer zugeordnet hinterlegt.
Der Benutzer als Fahrer wird an Hand der IMEI identifiziert und authentifiziert.

Die Funktionen eines GPS-Mobilfunk-Telematiksystem, eines Moduls zur Identifizierung und Authentifizierung des Fahrzeugbenutzers wie auch eines Anzeige- und Eingabegeräts sind somit mittels der installierten Anwendung mit den im Fahrzeug erforderlichen Funktionen für die Führung des elektronischen Fahrtenbuchs auf dem Server, bis auf die Identifikation des vom Benutzer genutzten Fahrzeugs, auf dem Mobiltelefon implementiert.

Zur Identifikation des Fahrzeugs ist eine Kennbox in einer Stromversorgungsleitung für die Mobiltelefonhalterung bzw. einem Ladekabel für das Mobiltelefon angeordnet.

In der Kennbox ist neben Anderem ein Element angeordnet, auf dem Daten einer fahrzeugspezifischen Kennung kodiert hinterlegt sind, die beim Verbinden des Mobiltelefons mit der fahrzeuginternen Stromversorgung an das Mobiltelefon übertragen sowie mittels der für die Führung des elektronischen Fahrtenbuchs installierten Anwendung zusätzlich an den Server übertragen werden.

Die Übertragung der kodierten Kennung des Fahrzeugs kann durch Modulation der Versorgungsspannung aus dem Bordnetz oder Überlagerung der Bordspannung mit einem digitalen Signal erfolgen.

Wird ein bestimmtes Fahrzeug stets ausschließlich durch einen bestimmten Benutzer als Fahrer genutzt, so wird dieser an Hand der IMEI identifiziert und authentifiziert, ohne dass notwendigerweise eine zusätzliche fahrzeugspezifische Kennung an den Server übertragen werden muss.

Zur Positionsbestimmung des Fahrzeugs, mit Start- und Zielort sowie zur Berechnung der mit dem Fahrzeug zurückgelegten Wegstrecke, wird primär das GPS-Modul des Mobiltelefons genutzt.

Alternativ kann die Positionsbestimmung des Mobiltelefons auf Basis von Funkzellen mit Hilfe bekannter Methoden, wie Cell-Identification und Timing Advance erfolgen.
Diese Methode ist schneller als mittels GPS und auch an Orten anwendbar, an denen keine GPS-Signale empfangbar sind.

Zudem ist die Position des Mobiltelefons, in der Regel die des Nutzers feststellbar, wenn sich das Mobiltelefon außerhalb des Fahrzeugs befindet.

Zwischen dem Mobiltelefon und dem Server erfolgt die drahtlose Datenübertragung über ein WAN (Wide Area Network), wie dem Internet, vorzugsweise verschlüsselt mit einer mobilen IP (Internet Protocol)-Adresse und ein VPN (Virtual Private Network).

Die Vorteile der Erfindung bestehen insbesondere in der wesentlich besseren Anwenderfreundlichkeit und Handhabbarkeit der automatischen Führung eines elektronischen Fahrtenbuchs auf einem Server durch die Nutzung handelsüblicher Mobiltelefone, wie BlackBerry-Geräte, gegenüber bisher bekannten Lösungen.

Es sind keine Installationen für eine Telematikbox im Fahrzeug erforderlich.

Eingriffe in die Fahrzeugelektronik sowie eine Schnittstelle zum CAN (Controller Area Network) - Bus des Fahrzeugs sind nicht erforderlich.

Rückwirkungen auf die Fahrzeugelektronik sind ausgeschlossen.

Dem Fahrer steht das Mobiltelefon gleichzeitig zur Kommunikation und als Navigationsgerät mit ständig aktualisiertem Kartensystem zur Verfügung.

Des Weiteren hat der Benutzer mittels des mobilen Endgeräts, wie dem Mobiltelefon, bei Berechtigung Zugang zu internen Firmennetzen und kann dort gehostete Anwendungen nutzen und Daten mit diesen austauschen.

Aus der Kombination des elektronischen Fahrtenbuchs mit Positionsbestimmung des Fahrzeugs und dessen Benutzer mit gleichzeitiger Kommunikationsmöglichkeit ergeben sich im Flottenmanagement insbesondere Vorteile für die Auslastung von Fahrzeugen sowie der sofortigen Reaktion auf Anforderungen durch Kunden oder Auftragsübermittlung vom Firmenstandort.

Das automatisch geführte elektronische Fahrtenbuch ist manipulationssicher und erfüllt die gesetzlichen Anforderungen, wobei eine Behördenschnittstelle implementiert ist, die einen Zugriff bei Überprüfungen gewährleistet.

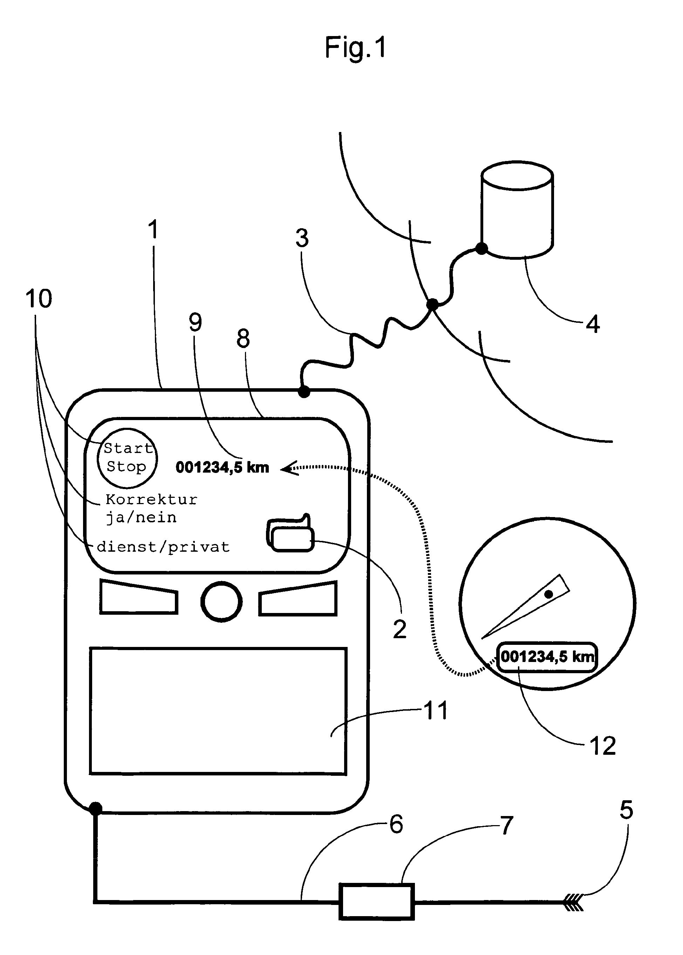

Die Erfindung wird als Ausführungsbeispiel an Hand von
Fig. 1 als schematische Darstellung der Anordnung näher erläuter.

Nach Fig. 1 besteht eine Anordnung für ein web-basiertes elektronisches Fahrtenbuch im Wesentlichen aus einem Mobiltelefon 1, insbesondere einem BlackBerry-Gerät mit integriertem GPS-Modul, auf dem eine Anwendungssoftware 2 mit den in einem Fahrzeug erforderlichen Funktionen für die Führung des elektronischen Fahrtenbuchs installiert ist.

Das elektronische Fahrtenbuch wird in Anlehnung an die aus der Druckschrift DE 20 2007 694 U1 bekannte Weise geführt, indem über eine drahtlose Netzwerkverbindung 3 Daten zur Fahrt, wie Start und Zielort, zurückgelegte Wegstrecke sowie Datum und Zeitangaben an das auf einem Server 4 hinterlegte elektronische Fahrtenbuch übertragen worden sind.

Die zwischen einem Start- und Zielort zurückgelegte Wegstrecke ist vorzugsweise auf Basis von GPS-Daten berechnet worden, die während der Fahrt vom GPS-Modul des Mobiltelefons 1 in Echtzeit bestimmt wurden.

Die Stromversorgung des Mobiltelefons 1 erfolgt bei dessen Einsatz in einem Fahrzeug üblicherweise über ein Bordnetz 5.

Vor Beginn einer Fahrt startet ein Benutzer die Anwendungssoftware 2 mit den im Fahrzeug erforderlichen Funktionen für die Führung des elektronischen Fahrtenbuchs und verbindet das Mobiltelefon 1 mit dem Bordnetz 5, indem dieses in einer entsprechenden Halterung platziert oder mittels eines Ladekabels angeschlossen wird.

In einer Leitung 6 in Form des Ladekabels oder einer internen Verkabelung zu oder in der Halterung für das Mobiltelefon 1 ist eine Kennbox 7 angeordnet.
In der Kennbox 7 sind Daten einer fahrzeugspezifischen Kennung hinterlegt, deren Übertragung an das Mobiltelefon 1 initiiert wird, sobald ein Strom fließt.

Die Daten der fahrzeugspezifische Kennung werden zu Fahrtbeginn mittels des Mobiltelefons 1 ebenso an den Server 4 übertragen wie eine EMEI des Mobiltelefons 1 zur Identifizierung und Authentifizierung des Fahrzeugbenutzers.

Auf einem Display 8 des Mobiltelefons 1 wird eine nicht näher dargestellte Eingabemaske der Anwendungssoftware 2 angezeigt, in der zu Fahrtbeginn u.a. ein für das Fahrzeug auf dem Server 4 hinterlegter Kilometerstand 9 sowie Eingabefelder 10 zur Auswahl des dienstlichen oder privaten Fahrtzwecks, der Korrektur des angezeigten Kilometerstands und dem Start/Ende der Fahrt abgebildet sind.

Der Fahrzeugbenutzer wählt vor Fahrtbeginn den Fahrtzweck aus und startet über das entsprechende Eingabefeld 10 die Aufzeichnung einer neuen Fahrt im elektronischen Fahrtenbuch auf dem Server 4.

Die Übertragung der Daten zur Fahrt, insbesondere der auflaufenden GPS-Daten erfolgt vorzugsweise in Echtzeit, wo dies auf Grund von Empfangs- und Sendebedingungen nicht möglich ist, in periodischen Abständen.

Zum Fahrtende wird die Aufzeichnung über das entsprechende Eingabefeld 10 zunächst gestoppt, wobei der Fahrzeugbenutzer die auf dem Display 8 wiedergegebene Wegstrecke, die auf Basis der während der Fahrt aufgelaufenen GPS-Daten errechnet und im elektronischen Fahrtenbuch hinterlegt wurden, mit dem auf einem Kilometerzähler 12 des Fahrzeugs angezeigten Stand, bestätigt diesen bei Übereinstimmung beider Angaben oder korrigiert diesen bei Abweichung mit dem im elektronischen Fahrtenbuch aufgelaufenen Kilometerstand.

Mit der Bestätigung des korrekten Kilometerstands ist die Aufzeichnung der Fahrt beendet.

Auf dem Server 4 sind somit zum Fahrtende alle erforderlichen Daten der im elektronischen Fahrtenbuch aufgezeichneten Fahrt unter Zuordnung der zurückgelegten Wegstrecke zum Fahrer und des benutzten Fahrzeugs hinterlegt.

Die Eingaben in die Maske erfolgen in üblicher Weise mittels Tasten eines Tastenfelds 11 des Mobiltelefons 1.

Die Anzeige der Eingabemaske der Anwendungssoftware 2 auf dem Display 8 erfolgt zu Beginn und Ende einer Fahrt, so dass die anderen Funktionen des Mobiltelefons 1, insbesondere als Navigationsgerät während der Fahrt oder der Darstellung von übermittelten Nachrichten nicht beeinträchtigt sind.

### Verwendete Bezugszeichen

- 1: Mobiltelefon
- 2: Anwendungssoftware
- 3: drahtlose Netzwerkverbindung
- 4: Server
- 5: Bordnetz
- 6: Leitung
- 7: Kennbox
- 8: Display
- 9: Kilometerstand
- 10: Eingabefelder
- 11: Tastenfeld
- 12: Kilometerzähler

## Patentansprüche

1. Anordnung zur automatischen Führung eines elektronischen Fahrtenbuchs mittels Positionsdaten, die vom Fahrzeug über eine drahtlose Netzwerkverbindung an einen Server übertragen werden, **dadurch gekennzeichnet,**
**dass** die Anordnung im Wesentlichen aus einem Mobiltelefon (1) mit integriertem GPS-Modul und einer auf dem Mobiltelefon (1) installierten Anwendungssoftware (2) mit den in einem Fahrzeug erforderlichen Funktionen für die Führung des elektronischen Fahrtenbuchs besteht.

2. Anordnung zur automatischen Führung eines elektronischen Fahrtenbuchs nach Anspruch 1, **dadurch gekennzeichnet,**
**dass** zur Identifizierung und Authentifizierung eines Benutzers des Mobiltelefons (1) als Fahrer des Fahrzeugs eine IMEI (International Mobile Equipment Identity) des Mobiltelefons (1) auf dem Server (4) hinterlegt ist.

3. Anordnung zur automatischen Führung eines elektronischen Fahrtenbuchs nach Anspruch 1, **dadurch gekennzeichnet,**
**dass** zur Identifizierung und Authentifizierung eines Benutzers des Mobiltelefons (1) als Fahrer des Fahrzeugs eine Rufnummer des Mobiltelefons (1) auf dem Server (4) hinterlegt ist.

4. Anordnung zur automatischen Führung eines elektronischen Fahrtenbuchs nach Anspruch 1 und einem der Ansprüche 2 oder 3, **dadurch gekennzeichnet,**
**dass** in einer Leitung (6) zur Stromversorgung des Mobiltelefons (1) aus einem Bordnetz (5) des Fahrzeugs eine Kennbox (7) angeordnet ist, auf der Daten einer fahrzeugspezifischen Kennung hinterlegt sind.

5. Anordnung zur automatischen Führung eines elektronischen Fahrtenbuchs nach Anspruch 1 und einem der Ansprüche 2 oder 3 sowie Anspruch 4, **dadurch gekennzeichnet,**
**dass** zum Fahrtende alle erforderlichen Daten der im elektronischen Fahrtenbuch aufgezeichneten Fahrt unter Zuordnung der zurückgelegten Wegstrecke zum Fahrer und des benutzten Fahrzeugs auf dem Server (4) hinterlegt sind.
